# EUROPEAN PATENT SPECIFICATION

(11) **EP 2 166 773 B1**
(45) Date of publication and mention of the grant of the patent: **24.04.2013**
(21) Application number: 08425624.7
(22) Date of filing: 23.09.2008
(51) Int. Cl.: H04N 9/82, G08G 1/0967

(54) **Digital multimedia recording system and corresponding recording method**
Digitales Multimedia-Aufzeichnungssystem und entsprechendes Aufzeichnungsverfahren
Système d'enregistrement numérique multimédia et procédé d'enregistrement correspondant

(43) Date of publication of application: 24.03.2010
(73) Proprietor: Magneti Marelli S.p.A., 20011 Corbetta (MI) (IT)
(72) Inventor: Mortara, Piero, 10078 Venaria Reale (TO) (IT)
(74) Representative: Gallarotti, Franco

(56) References cited:
- JP-A- 2003 241 698
- JP-A- 2005 121 050
- US-A- 5 767 795
- US-B1- 7 124 024

## Description

The present invention concerns a system for the recording of multimedia information, of the type including a position detection module, a module for the recording of said multimedia information and means for correlating said multimedia information with positional information provided by said position detection module. Such multimedia information may include in particular audio and/or video and/or data information.

Systems allowing the recording of information and the execution of a georeferencing operation, associating positional information with recorded information are generally known.

For example, the Japanese patent publication JP2002340580 describes an information recorder provided with a function for the annotation of a desired vocal content, by means of the navigator apparatus onboard a vehicle. Such system acquires the voice by means of a microphone and the positional information at the instant of recording by means of a GPS system. The existence of vocal information at a certain geographic coordinate is then represented by means of an icon on the map of the navigator apparatus, so that by selecting the icon the vocal information is reproduced.

However, during survey operations, for example the reconnaissance of a route, the need arises for executing annotations that are connected to the position in which the annotation extensor is found and to successively reproduce them with an analogous temporal sequence. For example, this can occur in the context of the reconnaissance of the route of an automobile race, to write the route notes that will then be used by the team navigator to anticipate the turns, hills and other relevant route characteristics to the driver.

Document US - B1 - 7 124 924 discloses a mobile device to supply information for tourism which has stored information on a storage device, fragmented into sectors, each sector corresponding at least to one given geographic location. The device is also associated to a module delivering positioning information, corresponding to the location wherein the device is situated and a processor capable of drawing up a reading instruction containing at least the address of the sector of the information to be supplied in relation the positioning information on the basis of one or several correspondence table. A similar device is also disclosed in document US 5 767 795.

Document JP-2003 241698 discloses a display device for advertisement which uses GPS position detection for showing advertisement information as a function of the position.

Document JP-2005 121050 discloses an image recording system for a pipeline construction route, in which a videocamera takes pictures of the periphery of the construction route, while GPS position is acquired. The system synchronizes then position information and a map information.

The present invention has the object of obtaining a multimedia recording system solution that allows the recording and successive reproduction of the multimedia information under the control of positional information associated with such multimedia information maintaining a precise control of the temporal sequence.

According to the present invention, such object is achieved by means of a recording system and a corresponding recording method, having the characteristics specifically recalled in the annexed claims.

The invention will now be described with reference to the annexed drawings, provided by way of nonlimiting example only, wherein:
- Figure 1 schematically represents a recording system according to the invention in a recording phase;
- Figure 2 schematically represents the recording system according to the invention in a reproduction phase;
- Figure 3 represents an illustrative diagram of an additional functioning mode of the system according to the invention;
- Figure 4 represents a recomposition operation performed by the system according to the invention;
- Figure 5 represents a schematic block diagram of a recording system according to the invention.

In brief, a system is proposed for digital multimedia audio and/or video and/or data recording and reproduction synchronized with data on the geographical position of the system itself, coming, for example, from a GPS receiver or other position detection system. The system records the audio and/or video and/or data information onto one or more digital recording tracks. The positional information, including position coordinates such as latitude, longitude and altitude, in the phase of recording of the audio/video signal are acquired and stored in parallel on an additional dedicated synchronization track.

In the reproduction phase, the system according to the invention employs such dedicated synchronization track to synchronize the reproduction of the multimedia track/s with the position of the system itself.

According to an aspect of the invention, it is envisioned that the limitations of precision of the position detecting system be considered and an equivalence comparison be carried out between a current or actual position and the position stored on the synchronization track.

Furthermore, the recording and reproduction phases being linked to position and not to time, these could occur even at very different speeds, therefore exhibiting the possible problem of temporal incompatibility with a correct and intelligible reproduction of the multimedia recording. According to a further aspect of the invention, in such case it is envisioned apply a time contraction or time-stretching procedure to adequately reassemble and manage the reproduction times of the multimedia tracks.

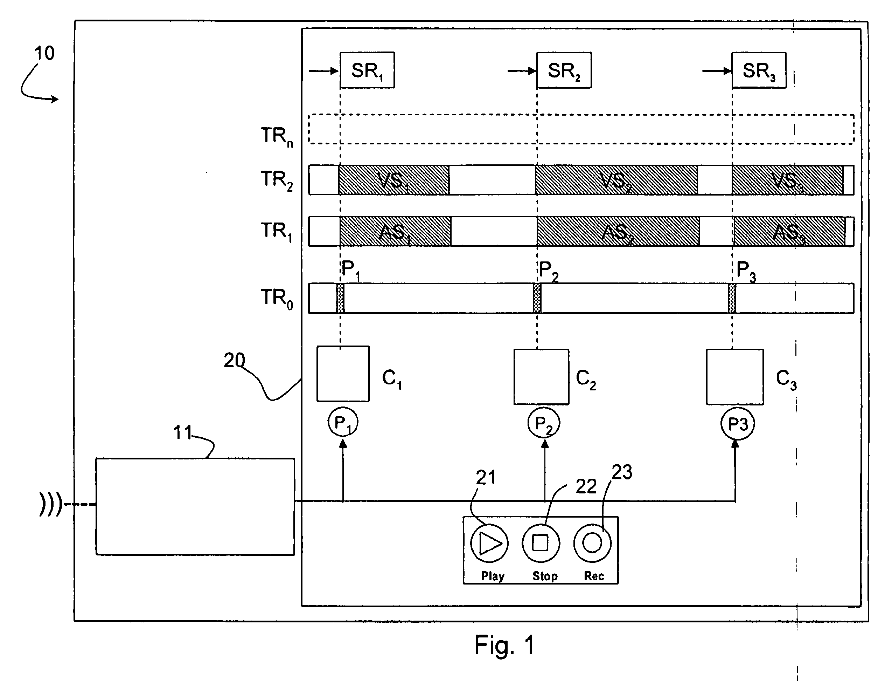

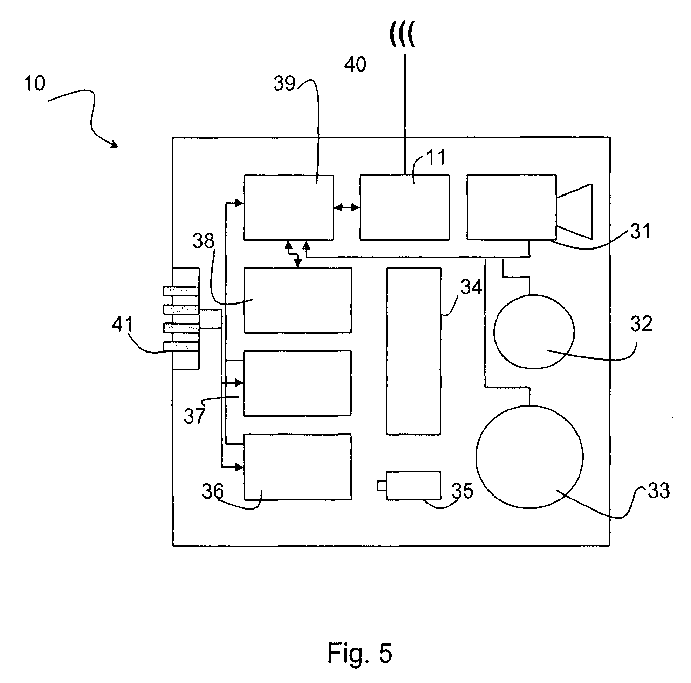

Figure 1 shows a schematic diagram of a recording system 10 in a recording phase. Such recording system 10 is partially shown herein with the elements required to illustrate the described operation phase, while a representation in schematic block form is visible in Figure 5.

Therefore, such recording system 10 includes a position detecting device 11 and a digital multimedia recorder 20. The position detecting device 11 is preferably a GPS satellite receiver, although it is possible to use other position detecting devices, such as an EGNOS satellite receiver.

The digital recording device 20 includes reproduction commands 21, for stopping the reproduction/recording 22 and for starting of recording 23. The digital recording device 20 operates by recording the multimedia signals on a plurality of tracks TR₁... TRₙ. In particular, in Figure 1, a track TR₁ is provided for the audio data and a track TR₂ for the video data.

Furthermore, the digital recording device 20 includes an additional synchronization track TR₀ that is dedicated to the recording of positional information, as will be better illustrated later.

The recording operation occurs as follows.

When the operator actuates the start recording command 23 to send a first start recording signal SR₁, recording of the respective first audio AS₁ and video VS₁ segments is started. Under the control of the recording start signal SR₁ the position detecting device 11 acquires a first position P₁ where the recording starts. Such first position P₁ includes corresponding georeference coordinates C₁, including, for example, latitude, longitude and altitude.

In figure 1 the tracks TR₀, TR₁, TR₂... TRₙ are shown parallel and spaced on the same time base so that the first position P₁ is stored on the synchronisation track TR₀ in temporal correspondence with the recording start of the first audio AS₁ and video VS₁ segments. Then the recording of the first audio AS₁ and video VS₁ segments is arrested by means of the reproduction/recording arrest command 22.

Then, in Figure 1 the second and third recording start signals, SR₂ and SR₃ respectively are represented, subsequently determining the recording of corresponding second audio AS₂ and video VS₂ segments and third audio AS₃ and video VS₃ segments onto the corresponding audio tracks TR₁ and TR₂. Upon each signalling of a recording start SR₂ and SR₃ a corresponding second position P₂ and third position P₃ is recorded, each including corresponding georeferencing coordinates C₂ and C₃.

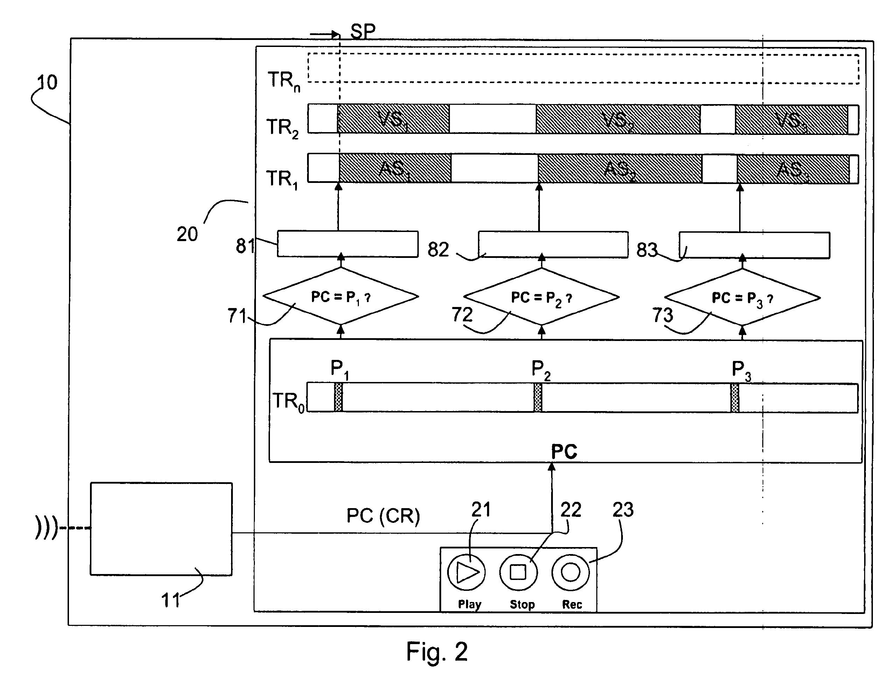

Figure 2 instead represents the recording system 10 in a reproduction phase.

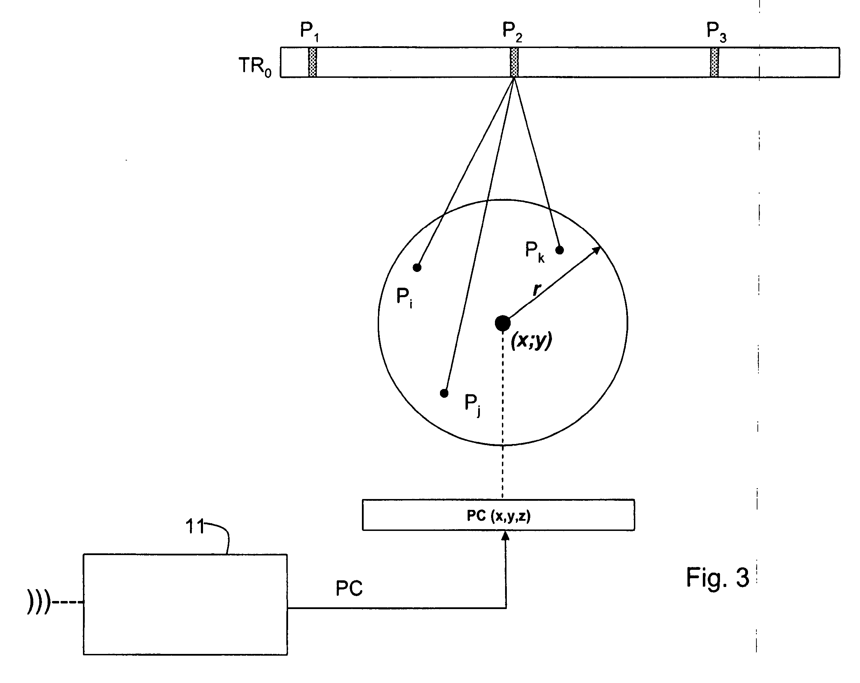

When operating the reproduction command 21, sending a reproduction signal SP, the position detector 11 acquires the current position PC and provides the corresponding current georeferencing coordinates CR to the digital recording device 20. The digital recording device 20 is configured to extract the positions P₁, P₂, P₃ stored on the synchronisation track TR₀ and to perform a comparison operation between the current position PC and each of the positions P₁, P₂, P₃ , represented by corresponding test blocks 71, 72, 73. The comparison operation of the test block 71, for example, evaluates whether such current position PC is equal to the position P₁. Additional details of the modes according to which such equivalence can be verified will be provided later in the description, in particular, with reference to Figure 3. Naturally, alternative methods are possible that envision performance of the comparison, for example, first with the first position P₁ recorded on the synchronisation track TR₀ and only successively applying the comparison to other positions in the case of a negative result.

In the affirmative case, an operation enabling reproduction of the first audio segment AS₁ and of the first video segment VS₁ is performed, represented by block 81. Analogous blocks 82 and 83 represent the operations enabling the segments AS₂, VS₂ and AS₃ and VS₃.

The position detector 11 acquires and provides the current position PC in a repeated or continuous way during the reproduction phase.

Figure 3, as was said, shows an illustrative diagram of a possible execution mode of the comparison operation 71, 72 or 73. The position detector 11, as was mentioned, provides the current position PC and the current coordinates CR of latitude, longitude and altitude. Indicating for simplicity latitude with the coordinate x, longitude with the coordinate y and altitude with the coordinate z, it is possible, for example, to consider a maximum error r with respect to the horizontal plane defined by the x and y coordinates. Any point Pᵢ, Pⱼ, Pₖ recorded on the synchronisation track TR₀ with coordinates x,y falling inside the circumference with radius equal to the maximum error r and having as its centre the current position PC, is considered valid for the comparison operation 71, 72 or 73, that is, it is considered equivalent to the current position PC. In this way, it is envisioned that the limitations in precision of the position detecting system be considered and an equivalence comparison be operated between a current or actual position and the position stored in the synchronisation track. For example, a system using a GPS position detector as detector may lead to errors of a few metres in the detection of the current position PC and in such case the window of equivalence will consequently have to be set to within a radius of at least 10 meters.

It is evident that, particularly if the comparison operation is performed as an equivalence comparison, the recording and reproduction phases being also linked to the position and not to time could occur even at very different speeds, consequently having the problem of possible temporal incompatibility with the correct and comprehensible multimedia reproduction of the recording.

In this case, it is necessary to suitably apply a time contraction or time-stretching procedure to adequately recompose and manage the reproduction times of the multimedia tracks.

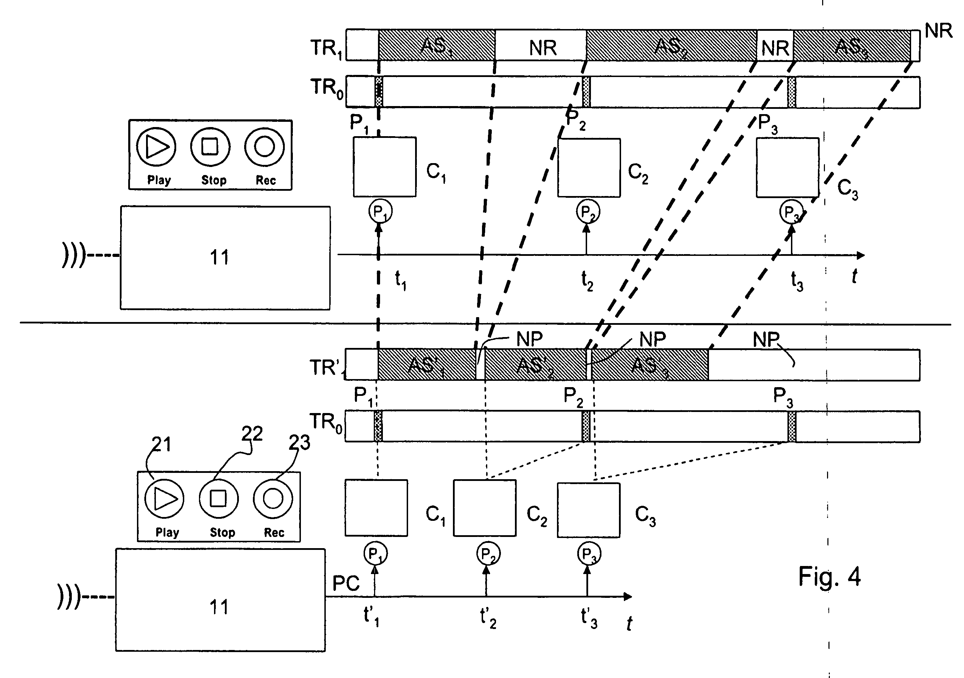

For this purpose, in Figure 4 a diagram represents one next to the other the phases of recording, above, and reproduction, below, so that the tracks are represented on the same time scale. For simplicity, only the recorded audio track TR₁ and corresponding synchronisation track TR₀ are represented in the recording phase. NR indicates recorded intervals of silence on the audio track TR₁, that is, the nonrecorded intervals between the audio segments AS₁, AS₂, AS₃. On the temporal axis t, instants of time are indicated T₁, T₂, T₃ in correspondence of which the recordings of the audio segments AS₁, AS₂, AS₃ are performed upon reaching the positions P₁, P₂, P₃. For the reproduction phase, as can be seen, time instances t'₁, t'₂, t'₃ coinciding with when the corresponding positions P₁, P₂, P₃, are reached during reproduction or the positions considered to be equivalent to them, are represented on the temporal axis t. As can be seen, the coincidental time instances t'₁, t'₂, t'₃ are closer in time, for example, because we are moving faster with respect to the movement speed used during the recording phase. This leads to the reproduction of a reproduced audio track TR'₁ providing corresponding contracted audio segments AS'₁, AS'₂, AS'₃. NP represents intervals of silence in the reproduction on the reproduced audio track TR'₁ between the corresponding audio segments AS'₁, AS'₂, AS'₃, which are also contracted with respect to the recorded intervals of silence NR.

Such contraction operations on the multimedia tracks can be performed based on the prediction of the time instants t'₁, t'₂, t'₃, corresponding to when positions P₁, P₂, P₃, or the positions considered to be equivalent to them, will be reached during the reproduction. Such predictions can be performed, for example, by operating a measurement or an estimation of the speed of movement of the auto vehicle, means of transport or person equipped with the proposed system. In other words, by processing speed information, for example, coming from the speedometer of the auto vehicle, it is envisioned to perform predictions relative to the coincident time instants t'₁, t'₂, t'₃. In the case in which it is envisioned to reach, for example, the coincident time instant t'₂ before the reproduction of the audio segment AS₁ is finished, the contraction of such audio segment AS₁ into a contracted segment AS'₁ is provided for, for example, by operating proportionally to the estimated mean speed. It is clear that such contraction can be obtained by a corresponding increase of the reproduction speed of the audio segment or the adoption of other contraction techniques can be envisioned to contract its duration, such as, for example, the removal of possible pauses and intervals of silence in the audio segment AS₁. Analogous operations can be performed on possible video tracks.

Constructively, the system can be realised as a low-cost electronic unit with the basic elements as represented in Figure 5.

Thus Figure 5 represents an electronic unit indicated in its entirety with 30, including a position detector 11, as well as elements associated with the digital recorder 20, that is, a video camera 31, a microphone 32 and a speaker 33, exchanging data, under the control of a microcontroller 39, with a memory 38. The microcontroller 39 can also be accessed by digital signal inputs 37 and analogue inputs 36, through a connector 41. The system also includes a power supply 34 and a battery 35.

Naturally, the operation principles can conveniently be used integrated by way of non-limiting example in a satellite navigation system which is normally already provided with the required basic components.

Therefore, the advantages of the proposed solution are clear.

The system according to the invention advantageously allows the recording and successive reproduction of multimedia information under the control of positional information associated with such multimedia information, maintaining precise control of the temporal sequence. This occurs in particular recording onto one or more digital traces the information and onto an additional synchronised trace the positional information at which the recording of determined multimedia information starts.

Naturally, without prejudice to the underlying principle of the invention, the details of construction and the embodiments may vary widely with respect to what has been described and illustrated by way of example only, without departing from the scope of the present invention.

In the system, the number of multimedia tracks is limited only by the memory capacity; multiple tracks can be recorded and reproduced simultaneously and/or individually selected.

Such a system may find a possible use as road route reconnaissance apparatus, by way of non-limiting example only, for example for performing reconnaissance of the route of an automobile race.

In the reconnaissance phase the system advantageously allows recording in real-time in a way synchronised with the vehicle position, vocal indications describing a detail of the route, for example, regarding the type and radius of a turn and relative travel speed, surface condition and slope of the road, possible hidden obstacles.

The reproduction phase, used instead during training or during the race, allows the verbal indications to be received coherently synchronised with the vehicle position along the segment of interest.

The proposed system can therefore conveniently be used in diverse contexts (for example, terrestrial, nautical, river navigation, aeronautical) and applications (for example, reconnaissance of routes for purposes of competition, tourism, investigation or mission reporting).

It is also clear that the reproduction system may not necessarily be incorporated in the recording system, but constitute a separate system and/or one that can be operated separately, that receives recorded multimedia information through communication channels via cable or wireless or on recoding media, such as, for example compact disk, DVD, FLASH memory keys.

## Claims

1. A system for the recording of multimedia information, of the type that includes a position detection module (11), a digital recording module (20) of said multimedia information (AS, VS) and means for correlating said multimedia information (AS, VS) with positional information (**P₁, P₂, P₃**) provided by said position detection module (11), **characterised in that** said recording module (20) includes recording said multimedia information (AS, VS) onto one or more recording tracks (TR₁... TRₙ), said recording module (20) including at least one additional track (TR₀) for the recording of said positional information (P₁, P₂, P₃) in a synchronised way with respect to said multimedia information (AS, VS) said recording module recording at respective times (t₁, t₂, t₃) elapsed from the start of the recording operation respective segments of said multimedia information (AS, VS) and corresponding positional information (P₁, P₂, P₃) , said recording module (20) being configured to store said positional information (P₁, P₂, P₃) on the additional track (TR₀) in correspondence with the times (t₁, t₂, t₃) elapsed between the start of the recording operation and the storage of said positional information.

2. The system according to claim 1, **characterised in that** said recording module (20) is configured to reproduce said multimedia information, extract the positions (P₁, P₂, P₃) stored on the synchronisation track (TR₀), perform a comparison operation (71, 72, 73) between the current position (PC) and one or more of the positions (P₁, P₂, P₃) stored on the synchronisation track (TR₀) to evaluate whether said current position (PC) is equal or equivalent to said one or more stored positions (P₁, P₂, P₃) and enable (81, 82, 83) in the affirmative case, the reproduction of recorded multimedia information synchronised with said stored position (P₁, P₂, P₃).

3. The system according to claim 2, **characterised in that** said position detector (11) is configured to acquire and provide the current position (PC) in a repeated or continuous way during the reproduction phase.

4. The system according to claim 2 or 3, **characterised in that** said comparison operation (71, 72, 73) evaluates said current position (PC) as being equivalent to said one or more stored positions (P₁, P₂, P₃) if it falls inside of a circumference having a radius equal to a defined maximum error (r), and having as its centre the current position (PC).

5. The system according to one or more of the previous claims, **characterised in that** said recording module (20) is configured to apply a time contraction procedure during said reproduction phase to compensate for differences in moving speed between the recording phase and the reproduction phase.

6. The system according to claim 5, **characterised in that** said time contraction procedure includes generating upon reproduction one or more multimedia information tracks (TR'₁) including multimedia information (AS'₁, AS'₂, AS'₃) contracted temporally and/or intervals of silence (NP) contracted temporally with respect to the corresponding recorded intervals of silence (NR).

7. The system according to one or more of the previous claims, **characterised in that** it is included in or associated with a road route reconnaissance apparatus.

8. A method for the recording of multimedia information, including detecting the position (11), recording digitally said multimedia information (AS, VS) and putting in correspondence said multimedia information (AS, VS) with positional information (P₁, P₂, P₃) provided in said position detection operation (11), **characterised in that**
it also includes recording said multimedia information (AS, VS) onto one or more recording tracks (TR₁... TRₙ) and making available at least one additional track (TR₀) for the recording of said positional information (P₁, P₂, P₃) in a synchronised way with respect to said multimedia information (AS, VS), recording at respective times (t₁, t₂, t₃) elapsed from the start of the recording operation respective segments of said multimedia information (AS, VS) and corresponding positional information (P₁, P₂, P₃) , the method further including storing said positional information (P₁, P₂, P₃) onto the synchronisation track (TR₀) in correspondence with the times (t₁, t₂, t₃) elapsed between the start of the recording operation and the storage of said positional information.

9. The method according to claim 8, **characterised in that** it includes reproducing said multimedia information, extracting the positions (P₁, P₂, P₃) stored on the synchronisation track (TR₀) and performing a comparison operation (71, 72, 73) between the current position (PC) and one or more of the positions (P₁, P₂, P₃) stored on the synchronisation track (TR₀) to evaluate whether said current position (PC) is equal or equivalent to said one or more of the stored positions (P₁, P₂, P₃) and to authorise (81, 82, 83) in the affirmative case the reproduction of recorded multimedia information synchronised with said stored position (P₁, P₂, P₃).

10. The method according to claim 9, **characterised in that** it includes providing the current position (PC) in a repeated or continuous way during the reproduction phase.

11. The method according to claim 9 or 11, **characterised in that** said comparison operation (71, 72, 73) evaluates said current position (PC) as being equivalent to said one or more stored positions (P₁, P₂, P₃) if it falls inside of a circumference having a radius equal to a defined maximum error (r), and having as its centre the current position (PC).

12. The method according to one or more of the previous claims from 8 to 11, **characterised in that** it includes applying a time contraction procedure during said reproduction phase to compensate for differences in moving speed between the recording phase and the reproduction phase.

13. The method according to claim 12, **characterised in that** said time contraction procedure includes reproducing one or more multimedia information tracks (TR'₁) including multimedia information (AS'₁, AS'₂, AS'₃) contracted temporally and/or with intervals of silence (NP) contracted temporally with respect to corresponding recorded intervals of silence (NR), in particular, said contraction procedure being performed based on the prediction of coincidental time instants (t'₁, t'₂, t'₃) in correspondence of which the respective positions (P₁, P₂, P₃) stored on the synchronisation track (TR₀) will be reached.

## Patentansprüche

1. System zum Aufzeichnen von Multimediainformationen von dem Typ, der ein Positionsdetektionsmodul (11), ein digitales Modul (20) zum Aufzeichnen der Multimediainformationen (AS, VS) und Mittel zum Korrelieren der Multimediainformationen (AS, VS) mit Positionsinformationen (P₁, P₂, P₃), die von dem Positionserkennungsmodul (11) zur Verfügung gestellt werden, enthält, **dadurch gekennzeichnet, dass** das Aufzeichnungsmodul (20) das Aufzeichnen der Multimediainformationen (AS, VS) auf eine oder mehrere Aufzeichnungsspuren (TR₁... TRₙ) enthält, wobei das Aufzeichnungsmodul (20) wenigstens eine zusätzliche Spur (TR₀) für das Aufzeichnen der Positionsinformationen (P₁, P₂, P₃) synchronisiert in Bezug auf die Multimediainformationen (AS, VS) enthält, wobei das Aufzeichnungsmodul zu den entsprechenden Zeiten (t₁, t₂, t₃), die seit dem Start des Aufzeichnungsvorgangs vergangen sind, die entsprechenden Segmente der Multimediainformationen (AS, VS) und die entsprechenden Positionsinformationen (P₁, P₂, P₃) aufzeichnet, wobei das Aufzeichnungsmodul (20) konfiguriert ist, um die Positionsinformationen (P₁, P₂, P₃) auf der zusätzlichen Spur (TR₀) entsprechend den Zeiten (t₁, t₂, t₃), die zwischen dem Start des Aufzeichnungsvorgangs und dem Speichern der Positionsinformationen vergangen sind, zu speichern.

2. System nach Anspruch 1, **dadurch gekennzeichnet, dass** das Aufzeichnungsmodul (20) konfiguriert ist, um die Multimediainformationen wiederzugeben, die Positionen (P₁, P₂, P₃) wiederzugewinnen, die auf der Synchronisationsspur (TR₀) gespeichert sind, eine Vergleichsoperation (71, 72, 73) zwischen der aktuellen Position (PC) und einer oder mehreren Positionen (P₁, P₂, P₃), die auf der Synchronisationsspur (TR₀) gespeichert sind, auszuführen, um zu bewerten, ob die aktuelle Position gleich oder gleichwertig zu der einen oder den mehreren gespeicherten Positionen (P₁, P₂, P₃) ist, und, wenn das der Fall ist, die Wiedergabe aufgezeichneter Multimediainformationen synchronisiert mit der gespeicherten Position (P₁, P₂, P₃) zu ermöglichen (81, 82, 83).

3. System nach Anspruch 2, **dadurch gekennzeichnet, dass** der Positionsdetektor (11) konfiguriert ist, um die aktuelle Position (PC) wiederholt oder kontinuierlich während der Wiedergabephase zu erfassen und bereitzustellen.

4. System nach Anspruch 2 oder 3, **dadurch gekennzeichnet, dass** die Vergleichsoperation (71, 72, 73) die aktuelle Position (PC) als gleichwertig zu der einen oder den mehreren gespeicherten Positionen (P₁, P₂, P₃) bewertet, wenn sie in einen Umkreis fällt, der einen Radius aufweist, der gleich einem definierten maximalen Fehler (r) ist, und der an seinem Zentrum die aktuelle Position (PC) aufweist.

5. System nach einem oder mehreren der vorhergehenden Ansprüche, **dadurch gekennzeichnet, dass** das Aufzeichnungsmodul (20) konfiguriert ist, um eine Zeitverkürzungsprozedur während der Wiedergabephase anzuwenden, um Unterschiede in der Bewegungsgeschwindigkeit zwischen der Aufzeichnungsphase und der Wiedergabephase auszugleichen.

6. System nach Anspruch 5, **dadurch gekennzeichnet, dass** diese Zeitverkürzungsprozedur das Erzeugen nach der Wiedergabe einer oder mehrerer Informationsspuren (TR'₁) enthält, die Multimediainformationen (AS'₁, AS'₂, AS'₃), die in Bezug auf die entsprechenden aufgezeichneten Ruheintervalle (NR) zeitlich verkürzt sind, und/oder Ruheintervalle (NP), die in Bezug auf die entsprechenden aufgezeichneten Ruheintervalle (NR) zeitlich verkürzt sind, enthalten.

7. System nach einem oder mehreren der vorhergehenden Ansprüche, **dadurch gekennzeichnet, dass** es in einer Vorrichtung zur Straßenroutenerkundung enthalten oder ihr zugeordnet ist.

8. Verfahren zum Aufzeichnen von Multimediainformationen, welches das Detektieren der Position (11), das digitale Aufzeichnen der Multimediainformationen (AS, VS) und das Bringen der Multimediainformationen (AS, VS) in Zusammenhang mit Positionsinformationen (P₁, P₂, P₃), die in dem Positionsdetektionsvorgang (11) bereitgestellt sind, enthält, **dadurch gekennzeichnet, dass**
es auch das Aufzeichnen der Multimediainformationen (AS, VS) auf eine oder mehrere Aufzeichnungsspuren (TR₁... TRₙ) und das Verfügbarmachen von wenigstens einer zusätzlichen Spur (TR₀) für das Aufzeichnen der Positionsinformationen (P₁, P₂, P₃) synchronisiert in Bezug auf die Multimediainformationen (AS, VS) sowie das Aufzeichnen entsprechender Segmente und entsprechender Positionsinformationen (P₁, P₂, P₃) zu entsprechenden Zeiten (t₁, t₂, t₃), die seit dem Start des Aufzeichnungsvorgangs vergangen sind, enthält, wobei das Verfahren ferner das Speichern der Positionsinformationen (P₁, P₂, P₃) auf der Synchronisationsspur (TR₀) entsprechend den Zeiten (t₁, t₂, t₃), die zwischen dem Start des Aufzeichnungsvorgangs und dem Speichern der Positionsinformationen vergangen sind, enthält.

9. Verfahren nach Anspruch 8, **dadurch gekennzeichnet, dass** es das Wiedergeben der Multimediainformationen, das Wiedergewinnen der Positionen (P₁, P₂, P₃), die auf der Synchronisationsspur (TR₀) gespeichert sind, und das Ausführen einer Vergleichsoperation (71, 72, 73) zwischen der aktuellen Position (PC) und einer oder mehreren der Positionen (P₁, P₂, P₃), die auf der Synchronisationsspur (TR₀) gespeichert sind, um zu bewerten, ob die aktuelle Position gleich oder gleichwertig der einen oder den mehreren gespeicherten Positionen (P₁, P₂, P₃) ist, und, wenn das der Fall ist, die Wiedergabe der aufgezeichneten Multimediainformationen synchronisiert mit der gespeicherten Position (P₁, P₂, P₃) zuzulassen (81, 82, 83), enthält.

10. Verfahren nach Anspruch 9, **dadurch gekennzeichnet, dass** es das wiederholte oder kontinuierliche Bereitstellen der aktuellen Position (PC) während der Wiedergabephase enthält.

11. Verfahren nach Anspruch 9 oder 10, **dadurch gekennzeichnet, dass** die Vergleichsoperation (71, 72, 73) die aktuelle Position (PC) als gleichwertig zu der einen oder den mehreren gespeicherten Positionen (P₁, P₂, P₃) bewertet, wenn sie in einen Umkreis fällt, der einen Radius aufweist, der gleich einem definierten maximalen Fehler (r) ist und der an seinem Zentrum die aktuelle Position (PC) aufweist.

12. Verfahren nach einem oder mehreren der vorhergehenden Ansprüche von 8 bis 11, **dadurch gekennzeichnet, dass** es das Anwenden eines Zeitverkürzungsvorgangs während der Wiedergabephase enthält, um Unterschiede in der Bewegungsgeschwindigkeit zwischen der Aufzeichnungsphase und der Wiedergabephase auszugleichen.

13. Verfahren nach Anspruch 12, **dadurch gekennzeichnet, dass** der Zeitverkürzungsvorgang das Wiedergeben einer oder mehrerer Multimediainformationsspuren (TR'₁) enthält, die Multimediainformationen (AS'₁, AS'₂, AS'₃), die zeitlich verkürzt und/oder Ruheintervalle (NP), die in Bezug auf entsprechende aufgezeichnete Ruheintervalle (NR) zeitlich verkürzt sind, enthalten, und dass insbesondere der Verkürzungsvorgang basierend auf der Vorhersage zufälliger Zeitpunkte (t'₁, t'₂, t'₃) ausgeführt wird, in Entsprechung mit denen die jeweiligen Positionen (P₁, P₂, P₃), die auf der Synchronisationsspur (TR₀) gespeichert sind, erreicht werden.

## Revendications

1. Système pour l'enregistrement d'informations multimédia du type qui comprend un module de détection de position (11), un module d'enregistrement numérique (20) desdites informations multimédia (AS, VS) et des moyens pour la corrélation desdites informations multimédia (AS, VS) avec des informations de position (P₁, P₂, P₃) procurées par ledit module de détection de position (11), **caractérisé en ce que** ledit module d'enregistrement (20) comprend l'enregistrement desdites informations multimédia (AS, VS) sur une ou plusieurs pistes d'enregistrement (TR₁... TRₙ), ledit module d'enregistrement (20) comprenant au moins une piste additionnelle (TR₀) pour l'enregistrement desdites informations de position (P₁, P₂, P₃) d'une manière synchronisée par rapport auxdites informations multimédia (AS, VS), ledit module d'enregistrement enregistrant en des temps respectifs (t₁, t₂, t₃) écoulés à partir du début de l'opération d'enregistrement, des segments respectifs desdites informations multimédia (AS, VS) et des informations de position correspondantes (P₁, P₂, P₃) ledit module d'enregistrement (20) étant configuré pour stocker lesdites informations de position (P₁, P₂, P₃) sur la piste additionnelle (TR₀) en correspondance avec les temps (t₁, t₂, t₃) écoulés entre le début de l'opération d'enregistrement et le stockage desdites informations de position.

2. Système selon la revendication 1, **caractérisé en ce que** ledit module d'enregistrement (20) est configuré pour reproduire lesdites informations multimédia, extraire les positions (P₁, P₂, P₃) stockées sur la piste de synchronisation (TR₀), effectuer une opération de comparaison (71, 72, 73) entre la position actuelle (PC) et une ou plusieurs des positions (P₁, P₂, P₃) stockées sur la piste de synchronisation (TR₀) pour évaluer si ladite position actuelle (PC) est égale ou équivalente à l'une ou plusieurs des positions conservées (P₁, P₂, P₃) et permettre (81, 82, 83) dans l'affirmative la reproduction des informations multimédia enregistrées synchronisées avec ladite position conservée (P₁, P₂, P₃)_{.}

3. Système selon la revendication 2, **caractérisé en ce que** ledit détecteur de position (11) est configuré pour acquérir et procurer la position actuelle (PC) d'une manière répétitive ou continue pendant la phase de reproduction.

4. Système selon la revendication 2 ou 3, **caractérisé en ce que** ladite opération de comparaison (71, 72, 73) évalue ladite position actuelle (PC) comme équivalente à ladite ou auxdites positions conservées (P₁, P₂, P₃) si elle tombe à l'intérieure d'une circonférence ayant un rayon égal à une erreur maximale définie (r), et ayant comme centre la position actuelle (PC).

5. Système selon l'une ou plusieurs des revendications précédentes, **caractérisé en ce que** ledit module d'enregistrement (20) est configuré pour appliquer un mode opératoire de contraction en fonction du temps pendant ladite phase de reproduction pour compenser les différences dans la vitesse de déplacement entre la phase d'enregistrement et la phase de reproduction.

6. Système selon la revendication 5, **caractérisé en ce que** ledit mode opératoire de contraction en fonction du temps comprend la génération lors de la reproduction d'une ou plusieurs pistes d'informations multimédia (TR'₁) comprenant des informations multimédia (AS'₁, AS'₂, AS'₃) contractées temporairement et/ou des intervalles de silence (NP) contractés temporairement par rapport aux intervalles de silence enregistrés correspondants (NR).

7. Système selon l'une ou plusieurs des revendications précédentes, **caractérisé en ce qu'**il est inclus dans ou associé à un appareil de reconnaissance de trajectoire routière.

8. Procédé pour l'enregistrement d'informations multimédia, comprenant la détection de la position (11), l'enregistrement numérique desdites informations multimédia (AS, VS) et la mise en correspondance desdites informations multimédia (AS, VS) avec les informations de position (P₁, P₂, P₃) procurées dans ladite opération de détection de position (11), **caractérisé en ce que**
il comporte également l'enregistrement desdites informations multimédia (AS, VS) sur une ou plusieurs pistes d'enregistrement (TR₁... TRₙ), et la mise à disposition d'au moins une piste additionnelle (TR₀) pour l'enregistrement desdites informations de position (P₁, P₂, P₃) d'une manière synchronisée par rapport auxdites informations multimédia (AS, VS), l'enregistrement à des temps respectifs (t₁, t₂, t₃) écoulés à partir du début de l'opération d'enregistrement, des segments respectifs desdites informations multimédia (AS, VS) et des informations de position correspondantes (P₁, P₂, P₃), le procédé comprenant en outre l'enregistrement desdites informations de position (P₁, P₂, P₃) sur la piste de synchronisation (TR₀) en correspondance avec les temps (t₁, t₂, t₃) écoulés entre le début de l'opération d'enregistrement et le stockage de ladite information de position.

9. Procédé selon la revendication 8, **caractérisé en ce qu'**il comporte la reproduction desdites informations multimédia, l'extraction des positions (P₁, P₂, P₃) enregistrées sur la piste de synchronisation (TR₀) et l'accomplissement d'une opération de comparaison (71, 72, 73) entre la position actuelle (PC) et une ou plusieurs des positions (P₁, P₂, P₃) enregistrées sur la piste de synchronisation (TR₀) pour évaluer si ladite position actuelle (PC) est égale ou équivalente à ladite ou lesdites positions d'enregistrement (P₁, P₂, P₃) et pour autoriser (81, 82, 83) dans l'affirmative la reproduction des informations multimédia enregistrées synchronisées avec ladite position enregistrée (P₁, P₂, P₃)_{.}

10. Procédé selon la revendication 9, **caractérisé en ce qu'**il comprend la fourniture de ladite position actuelle (PC) d'une manière répétée ou continue pendant la phase de reproduction.

11. Procédé selon la revendication 9 ou 11, **caractérisé en ce que** ladite opération de comparaison (71, 72, 73) évalue la position actuelle (PC) comme étant équivalente à ladite ou lesdites positions enregistrées (P₁, P₂, P₃) si elle tombe à l'intérieur d'une circonférence ayant un rayon égal à une erreur maximale définie (r), et ayant en son centre la position actuelle (PC).

12. Procédé selon l'une ou plusieurs des revendications précédentes de 8 à 11, **caractérisé en ce qu'**il comprend l'application d'un mode opératoire de contraction temporelle pendant ladite phase de reproduction pour compenser des différences dans la vitesse de déplacement entre la phase d'enregistrement et la phase de reproduction.

13. Procédé selon la revendication 12, **caractérisé en ce que** ledit mode opératoire de contraction temporelle comprend la reproduction d'une ou plusieurs pistes d'informations multimédia (TR'₁) incluant des informations multimédia (AS'₁, AS'₂, AS'₃) contractées de manière temporelle et/ou avec des intervalles de silence (NP) contractés de manière temporelle par rapport aux intervalles de silence enregistrés correspondants (NR), en particulier ledit mode opératoire de contraction étant mis en oeuvre sur la base de la prédiction d'instants temporels de coïncidence (t'₁, t'₂, t'₃) en correspondance desquels les positions respectives (P₁, P₂, P₃) enregistrées sur la piste de synchronisation (TR₀) seront atteintes.
